# EUROPEAN PATENT APPLICATION

(11) **EP 4 813 777 A1**
(43) Date of publication of application: **30.09.2026**
(21) Application number: 24915204.2
(22) Date of filing: 27.12.2024
(51) Int. Cl.: B60W 30/06

(54) **PARKING METHOD AND APPARATUS, VEHICLE AND READABLE STORAGE MEDIUM**

(30) Priority: 02.01.2024 CN 202410004569
(71) Applicant: Chongqing Changan Automobile Co., Ltd., Chongqing 400023 (CN)
(72) Inventor: YE, Tianyu, Chongqing 400023 (CN); YANG, Jian, Chongqing 400023 (CN)
(74) Representative: Nederlandsch Octrooibureau
(86) International application number: PCT/CN2024/143388
(87) International publication number: WO 2025/145990

(57) **Abstract**

A parking method and apparatus, a vehicle and medium are provided. The method includes: when triggering a memory parking function of the vehicle, obtaining a relationship between vehicle park-out distances and vehicle steering angles according to vehicle park-out data when the vehicle parks out from a target position to a stop position; when triggering an automatic park-in function of the vehicle, determining target vehicle steering angles of the vehicle; and when controlling the vehicle to automatically park in from the stop position to the target position, controlling a steering wheel of the vehicle by using corresponding target vehicle steering angles.

## Description

### CROSS-REFERENCE TO RELATED APPLICATION

The present application claims a priority to a Chinese patent application No. 202410004569.9 filed with China Patent Office on Jan. 2, 2024, and entitled "PARKING METHOD AND APPARATUS, VEHICLE AND READABLE STORAGE MEDIUM", entire contents of which are incorporated herein by reference.

### TECHNICAL FIELD

Embodiments of the present application relate to a technical field of auxiliary driving, and specifically to a parking method, a parking apparatus, a corresponding vehicle, and a corresponding computer-readable storage medium.

### BACKGROUND

As more and more household vehicles are launched onto the market, families have become increasingly reliant on vehicles for trips. A limited number of parking spaces cannot accommodate the ever-growing vehicle parc, causing increasingly prominent parking problems. Among the problems, a difficulty of driver and passengers getting off vehicles parked in narrow parking spaces also plagues the driver and passengers. For example, if parking positions of two vehicles on both sides are improper and middle parking space therebetween will be extremely narrow. After the vehicle is parked in the middle parking space, doors thereof cannot be opened so that the driver and passengers inside the vehicle cannot get off the vehicle. Some parking spaces are adjacent to a wall, and after the vehicle is parked in the parking spaces, doors close to the wall cannot be opened.

However, in the prior art, most of current solutions are to use body radar sensors to assist vehicles in planning parking paths. Some solutions even employ visual sensors to create a parking space map to implement vehicle automatic park-in. The design method of these solutions requires excessive hardware costs and complex algorithms, so that it is difficult to apply the automatic parking function to a large number of low-end vehicle modes and bring help to many automobile consumers.

### SUMMARY

In view of the above problems, a parking method, an apparatus, a vehicle and a medium are provided to overcome the above problems or at least partially solve the above problems.

Specifically, the present application provides a parking method, applied to a vehicle, the method includes:
in response to triggering a memory parking function of the vehicle, recording vehicle park-out data when the vehicle parks out from a target position to a stop position, wherein the vehicle park-out data includes vehicle steering angles and vehicle park-out speeds corresponding to a plurality of park-out time points, and total vehicle park-out duration;
integrating the vehicle park-out speeds with respect to time, to obtain a first mapping relationship between vehicle park-out distances of the vehicle and time points;
obtaining a total vehicle park-out distance according to the total vehicle park-out duration and the first mapping relationship, wherein the total vehicle park-out distance includes the vehicle park-out distances;
obtaining a second mapping relationship between the vehicle park-out distances and the vehicle steering angles according to the first mapping relationship and the vehicle steering angles corresponding to the plurality of park-out time points;
in response to triggering an automatic park-in function of the vehicle, determining target vehicle steering angles of the vehicle according to the second mapping relationship; and
in response to controlling the vehicle to automatically park in from the stop position to the target position, controlling a steering wheel of the vehicle respectively by using corresponding target vehicle steering angles based on a plurality of park-in time points.

Further, the vehicle steering angle is determined based on a steering-wheel steering angles.

Further, in response to triggering an automatic park-in function of the vehicle, determining target vehicle steering angles of the vehicle according to the second mapping relationship includes:
determining vehicle park-in distances corresponding to a plurality of park-in time points of the vehicle; and
determining target vehicle steering angles respectively corresponding to the plurality of park-in time points according to the vehicle park-in distances corresponding to the plurality of park-in time points and the second mapping relationship.

Further, the vehicle further includes a plurality of sensors and a memory, and recording vehicle park-out data when the vehicle parks out from a target position to a stop position includes:
periodically collecting vehicle park-out data when the vehicle parks out from the target position to the stop position by using the plurality of sensors; and
recording the vehicle park-out data in the memory.

Further, the vehicle includes an accelerator pedal and a brake pedal, and in response to controlling the vehicle to automatically park in from the stop position to the target position, controlling a steering wheel of the vehicle respectively by using corresponding target vehicle steering angles based on a plurality of park-in time points includes:
in response to controlling the vehicle to automatically park in from the stop position to the target position, controlling the vehicle to travel at a preset vehicle park-in speed, and controlling a steering wheel of the vehicle by using corresponding target vehicle steering angles based on a plurality of park-in time points;
wherein the vehicle park-in speed corresponds to the plurality of park-in time points, and changes in the vehicle park-in speed corresponding to the plurality of park-in time points are divided into three phases: an acceleration phase, a constant-speed phase, and a deceleration phase;
controlling the vehicle to travel at a preset vehicle park-in speed includes:
   in the acceleration phase, increasing the vehicle park-in speed of the vehicle from zero to a preset vehicle speed via the accelerator pedal for accelerating traveling;
   in the constant-speed phase, controlling the vehicle park-in speed of the vehicle to remain at the preset vehicle speed for constant-speed traveling; and
   in the deceleration phase, reducing the vehicle park-in speed of the vehicle from the preset vehicle speed to zero via the brake pedal for stopping traveling.

Further, determining vehicle park-in distances corresponding to a plurality of park-in time points of the vehicle includes:
periodically collecting vehicle park-in speeds of the vehicle by using the plurality of sensors; and
integrating the vehicle park-in speeds with respect to time, to obtain vehicle park-in distances of the vehicle, wherein the vehicle park-in distances correspond to the plurality of park-in time points.

Further, determining target vehicle steering angles respectively corresponding to the plurality of park-in time points according to the vehicle park-in distances corresponding to the plurality of park-in time points and the second mapping relationship includes:
subtracting the vehicle park-in distances corresponding to the plurality of park-in time points from the total vehicle park-out distance respectively, to obtain target vehicle park-out distances of the vehicle corresponding to the plurality of park-in time points; and
according to the target vehicle park-out distances of the vehicle corresponding to the plurality of park-in time points, obtaining, from the second mapping relationship, vehicle steering angles corresponding to the plurality of park-in time points as the target vehicle steering angles.

Further, after, in response to controlling the vehicle to automatically park in from the stop position to the target position, controlling a steering wheel of the vehicle respectively by using corresponding target vehicle steering angles based on a plurality of park-in time points, the method further includes:
in response to triggering an automatic park-out function of the vehicle, controlling an automatic park-out speed of the vehicle by using the accelerator pedal and the brake pedal;
periodically collecting automatic park-out speeds of the vehicle by using the plurality of sensors, wherein the automatic park-out speeds correspond to a plurality of automatic park-out time points;
integrating the automatic park-out speeds with respect to time, to obtain automatic park-out distances corresponding to the plurality of automatic park-out time points;
according to the automatic park-out distances corresponding to the plurality of automatic park-out time points, obtaining park-out vehicle steering angles corresponding to the plurality of automatic park-out time points from the second mapping relationship; and
in response to controlling the vehicle to automatically park out from the target position to the stop position, controlling the steering wheel of the vehicle by using corresponding park-out vehicle steering angles based on the plurality of automatic park-out time points.

Further, in response to controlling the vehicle to automatically park in from the stop position to the target position, controlling a steering wheel of the vehicle respectively by using corresponding target vehicle steering angles based on a plurality of park-in time points further includes:
in response to receiving a stop instruction, performing a stop operation of the vehicle according to the stop instruction; or
in response to receiving a withdrawal instruction, controlling the vehicle to return to the stop position according to the withdrawal instruction.

Further, in response to controlling the vehicle to automatically park out from the target position to the stop position, controlling the steering wheel of the vehicle by using corresponding park-out vehicle steering angles based on the plurality of automatic park-out time points includes:
in response to receiving a stop instruction, performing a stop operation of the vehicle according to the stop instruction.

Further, after in response to controlling the vehicle to automatically park out from the target position to the stop position, controlling the steering wheel of the vehicle by using corresponding park-out vehicle steering angles based on the plurality of automatic park-out time points, the method further includes:
in response to re-triggering the memory parking function, clearing the memory; or
in response to receiving a clearing instruction, clearing the memory according to the clearing instruction.

The present application further provides a parking apparatus, applied to a vehicle, the apparatus includes:
a memory parking function trigger unit, configured to, in response to triggering a memory parking function of the vehicle, record vehicle park-out data when the vehicle parks out from a target position to a stop position, wherein the vehicle park-out data includes vehicle steering angles and vehicle park-out speeds corresponding to a plurality of park-out time points, and total vehicle park-out duration;
a first mapping relationship unit, configured to integrate the vehicle park-out speeds with respect to time, to obtain a first mapping relationship between vehicle park-out distances of the vehicle and time points;
a total vehicle park-out distance unit, configured to obtain a total vehicle park-out distance according to the total vehicle park-out duration and the first mapping relationship, wherein the total vehicle park-out distance includes the vehicle park-out distances;
a second mapping relationship unit, configured to obtain a second mapping relationship between the vehicle park-out distances and the vehicle steering angles according to the first mapping relationship and the vehicle steering angles corresponding to the plurality of park-out time points;
a target vehicle steering angle determining unit, configured to, in response to triggering an automatic park-in function of the vehicle, determine target vehicle steering angles of the vehicle according to the second mapping relationship; and
a vehicle automatic park-in control unit, configured to, in response to controlling the vehicle to automatically park in from the stop position to the target position, control a steering wheel of the vehicle by using corresponding target vehicle steering angles based on a plurality of park-in time points.

Further, the vehicle steering angle is determined based on a steering-wheel steering angle.

Further, the target vehicle steering angle determining unit includes:
a vehicle park-in distance determining section, configured to determine vehicle park-in distances corresponding to a plurality of park-in time points of the vehicle; and
a target vehicle steering angle determining section, configured to determine target vehicle steering angles respectively corresponding to the plurality of park-in time points according to the vehicle park-in distances corresponding to the plurality of park-in time points and the second mapping relationship.

Further, the vehicle further includes a plurality of sensors and a memory, and the memory parking function trigger unit includes:
a vehicle park-out data collecting section, configured to periodically collect vehicle park-out data when the vehicle parks out from the target position to the stop position by using the plurality of sensors; and
a vehicle park-out data recording section, configured to record the vehicle park-out data in the memory.

Further, the vehicle includes an accelerator pedal and a brake pedal, and the vehicle automatic park-in control unit includes:
a vehicle automatic park-in control section, configured to, in response to controlling the vehicle to automatically park in from the stop position to the target position, control the vehicle to travel at a preset vehicle park-in speed, and controlling a steering wheel of the vehicle by using corresponding target vehicle steering angles based on a plurality of park-in time points;
wherein the vehicle park-in speed corresponds to the plurality of park-in time points, and changes in the vehicle park-in speed corresponding to the plurality of park-in time points are divided into three phases: an acceleration phase, a constant-speed phase, and a deceleration phase;
the vehicle automatic park-in control section includes:
   an acceleration element, configured to in the acceleration phase, increase the vehicle park-in speed of the vehicle from zero to a preset vehicle speed via the accelerator pedal for accelerating traveling;
   a constant-speed element, configured to in the constant-speed phase, control the vehicle park-in speed of the vehicle to remain at the preset vehicle speed for constant-speed traveling; and
   a deceleration element, configured to in the deceleration phase, reduce the vehicle park-in speed of the vehicle from the preset vehicle speed to zero via the brake pedal for stopping traveling.

Further, the vehicle park-in distance determining section includes:
a vehicle park-in speed collecting section, configured to periodically collect vehicle park-in speeds of the vehicle by using the plurality of sensors; and
a vehicle park-in distance section, configured to integrate the vehicle park-in speeds with respect to time, to obtain vehicle park-in distances of the vehicle, wherein the vehicle park-in distances correspond to the plurality of park-in time points.

Further, the target vehicle steering angle determining section includes:
a target vehicle park-out distance element, configured to subtract the vehicle park-in distances corresponding to the plurality of park-in time points from the total vehicle park-out distance respectively, to obtain target vehicle park-out distances of the vehicle corresponding to the plurality of park-in time points; and
a target vehicle steering angle element, configured to according to the target vehicle park-out distances of the vehicle corresponding to the plurality of park-in time points, obtain, from the second mapping relationship, vehicle steering angles corresponding to the plurality of park-in time points as the target vehicle steering angles.

Further, after the vehicle automatic park-in control unit, the apparatus further includes:
an automatic park-out speed control unit, configured to, in response to triggering an automatic park-out function of the vehicle, control an automatic park-out speed of the vehicle by using the accelerator pedal and the brake pedal;
an automatic park-out speed collecting unit, configured to periodically collect automatic park-out speeds of the vehicle by using the plurality of sensors, wherein the automatic park-out speeds correspond to a plurality of automatic park-out time points;
an automatic park-out distance unit, configured to integrate the automatic park-out speeds with respect to time, to obtain automatic park-out distances corresponding to the plurality of automatic park-out time points;
a park-out vehicle steering angle unit, configured to according to the automatic park-out distances corresponding to the plurality of automatic park-out time points, obtain park-out vehicle steering angles corresponding to the plurality of automatic park-out time points from the second mapping relationship; and
a vehicle automatic park-out control unit, configured to, in response to controlling the vehicle to automatically park out from the target position to the stop position, control the steering wheel of the vehicle by using corresponding park-out vehicle steering angles based on the plurality of automatic park-out time points.

Further, the vehicle automatic park-in control module further includes:
a vehicle automatic park-in stop section, configured to, in response to receiving a stop instruction, perform a stop operation of the vehicle according to the stop instruction; or
a vehicle automatic park-in withdrawal section, configured to, in response to receiving a withdrawal instruction, control the vehicle to return to the stop position according to the withdrawal instruction.

Further, the vehicle automatic park-out control unit includes:
a vehicle automatic park-out stop section, configured to, in response to receiving a stop instruction, perform a stop operation of the vehicle according to the stop instruction.

Further, after the vehicle automatic park-out control unit, the apparatus includes:
a memory clearing unit, configured to, in response to re-triggering the memory parking function, clear the memory; or configured to, in response to receiving a clearing instruction, clear the memory according to the clearing instruction.

The present application provides a vehicle, including a processor, a memory, and computer instructions stored in the memory and capable of running on the processor, wherein the computer instructions, when being executed by the processor, implement above the parking method.

The present application provides a computer-readable storage medium, the computer-readable storage medium has computer instructions stored thereon, and the computer instructions, when being executed by a processor, implement the above parking method.

### Beneficial Effects

The beneficial effects of the present application are as follows.

In embodiments of the present application, the driver triggers an action of a memory parking function of the vehicle, vehicle park-out data when the vehicle parks out from a target position to a stop position is recorded, wherein the vehicle park-out data includes vehicle steering angles and vehicle park-out speeds corresponding to a plurality of park-out time points, and total vehicle park-out duration, the vehicle park-out speeds with respect to time is integrated to obtain a first mapping relationship between vehicle park-out distances of the vehicle and time points, a total vehicle park-out distance according to the total vehicle park-out duration and the first mapping relationship is then obtained, wherein the total vehicle park-out distance includes the vehicle park-out distances, a second mapping relationship between the vehicle park-out distances and the vehicle steering angles is obtained according to the first mapping relationship and the vehicle steering angles corresponding to the plurality of park-out time points, so as to when the driver triggers an automatic park-in function of the vehicle, determine target vehicle steering angles of the vehicle according to the second mapping relationship, and when controlling the vehicle to automatically park in from the stop position to the target position, control a steering wheel of the vehicle by using corresponding target vehicle steering angles based on a plurality of park-in time points. So that the vehicle can reversely park in the target position according to previously recorded vehicle park-out data without human manipulation. The parking method solves a problem that all persons in the vehicle cannot get off the vehicle when the vehicle is parked in a narrow parking space. Not only does it enable all persons in the vehicle to conveniently get on or off the vehicle at an appropriate position, i.e., the stop position, but also reduces related hardware for parking training and simplifies algorithms during parking training, thereby avoiding excessive cost during parking training and preventing occurrence of algorithm false triggering, so that the parking method can be more widely applied.

### BRIEF DESCRIPTION OF THE DRAWINGS

FIG. 1 is a step flowchart diagram of a parking method according to an embodiment of the present application;
FIG. 2 is an exemplary diagram of a vehicle park-out training and vehicle automatic park-in scenario according to an embodiment of the present application;
FIG. 3 is a relational diagram of characteristic physical quantities during a vehicle park-out training and a vehicle automatic park-in process according to an embodiment of the present application;
FIG. 4 is an example diagram of changes in vehicle park-in speed/automatic park-out speed during vehicle automatic park-in process and vehicle automatic park-out process according to an embodiment of the present application;
FIG. 5 is a schematic diagram of a structure of a parking apparatus according to an embodiment of the present application.

### DETAILED DESCRIPTION

To make the foregoing objectives, features and advantages of the present application more apparent and understandable, the present application will be described in further detail below with reference to drawings and specific embodiments. Apparently, the described embodiments are some of the embodiments of the present application, rather than all of the embodiments. All other embodiments obtained by those skilled in the art based on the embodiments of the present application without involving creative efforts shall fall within the protection scope of the present application.

In the related art of vehicle automatic parking, a body radar sensor is usually used to assist vehicles in planning parking path and visual sensors are used to create a parking space map to implement vehicle automatic parking. During implementing vehicle automatic parking by using the body radar sensors and the visual sensors, an environment around the vehicle is required to be established based on inputs from the body radar sensors and the visual sensors by using a model algorithm. The model algorithm at this time is required to process and analyze more types of data to construct a complete environmental model, which leads to excessive hardware costs required by the prior automatic parking solutions and complex algorithms related to the prior automatic parking solutions, so that it is difficult to apply the automatic parking method to a large number of low-end vehicle modes and bring help to many automobile consumers.

The core idea of the embodiments of the present application is that: the driver triggers an action of a memory parking function of the vehicle, vehicle park-out data when the vehicle parks out from a target position to a stop position is recorded, wherein the vehicle park-out data includes vehicle steering angles and vehicle park-out speeds corresponding to a plurality of park-out time points, and total vehicle park-out duration, the vehicle park-out speeds with respect to time is integrated to obtain a first mapping relationship between vehicle park-out distances of the vehicle and time points, a total vehicle park-out distance according to the total vehicle park-out duration and the first mapping relationship is then obtained, wherein the total vehicle park-out distance includes the vehicle park-out distances, a second mapping relationship between the vehicle park-out distances and the vehicle steering angles is obtained according to the first mapping relationship and the vehicle steering angles corresponding to the plurality of park-out time points, so as to when the driver triggers an automatic park-in function of the vehicle, determine target vehicle steering angles of the vehicle according to the second mapping relationship, and when controlling the vehicle to automatically park in from the stop position to the target position, control a steering wheel of the vehicle by using corresponding target vehicle steering angles based on a plurality of park-in time points. So that the vehicle can reversely park in the target position according to previously recorded vehicle park-out data without human manipulation. The parking method solves a problem that all persons in the vehicle cannot get off the vehicle when the vehicle is parked in a narrow parking space. Not only does it enable all persons in the vehicle to conveniently get on or off the vehicle at an appropriate position, i.e., the stop position, but also reduces related hardware for parking training and simplifies algorithms during parking training, thereby avoiding excessive cost during parking training and preventing occurrence of algorithm false triggering, so that the parking method can be more widely applied.

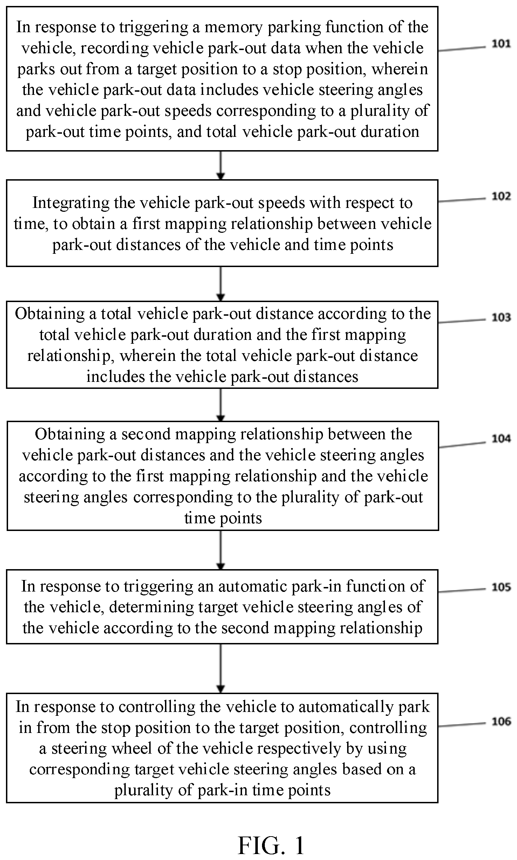

Referring to FIG. 1, a step flowchart diagram of a parking method according to an embodiment of the present application is shown. The method is applied to a vehicle and may include the following steps 101-106:
Step 101: in response to triggering a memory parking function of the vehicle, recording vehicle park-out data when the vehicle parks out from a target position to a stop position, wherein the vehicle park-out data includes vehicle steering angles and vehicle park-out speeds corresponding to a plurality of park-out time points, and total vehicle park-out duration.

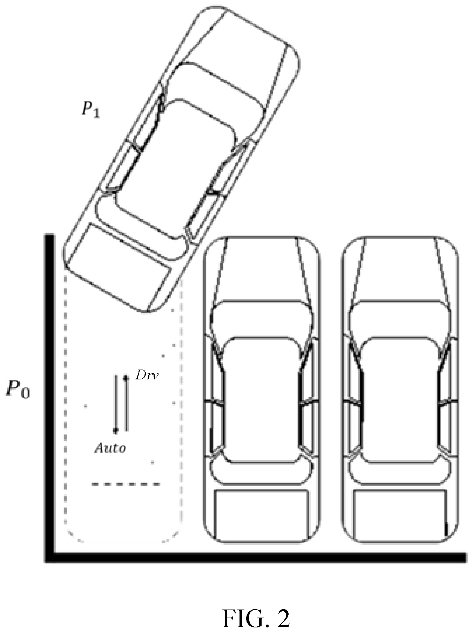

Referring to FIG. 2, an exemplary diagram of a vehicle park-out training and vehicle automatic park-in scenario according to an embodiment of the present application is shown. The target position *P*₀ has a narrow and limited space. When the vehicle is parked in the target position *P*₀, doors of the vehicle cannot be opened, which leads to that persons inside the vehicle cannot get off the vehicle. Therefore, at this time, the driver may drive the vehicle out of the target position *P*₀ to the stop position *P*₁. The stop position *P*₁ is a position where there is enough space for opening the doors of the vehicle so that persons inside the vehicle can get off the vehicle. Specifically, a process that the vehicle parks out from the target position *P*₀ to the stop position *P*₁ belongs to the vehicle parking training process. After all persons inside the vehicle get off the vehicle, when there is no one in the vehicle, the driver may operate the vehicle to automatically park back to the target position *P*₀ from the stop position *P*₁. Specifically, this process belongs to the vehicle automatic park-in process.

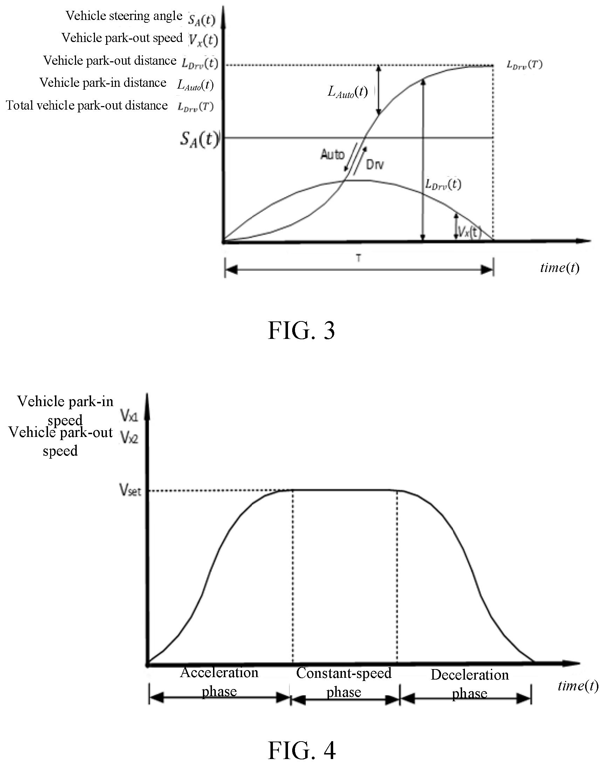

Referring to FIG. 3, a relational diagram of characteristic physical quantities during a vehicle park-out training and a vehicle automatic park-in process according to an embodiment of the present application is shown. As shown in FIG. 3, in the vehicle park-out training process, the vehicle records a correspondence between vehicle steering angles, vehicle park-out speeds, vehicle park-out distances, total vehicle park-out distances, and time points, and also records a correspondence between vehicle park-in distances and time points in the vehicle automatic park-in process. *Auto* and *Drv* in FIG. 3 only serve to distinguish between the vehicle park-out training process and the vehicle automatic park-in process. For the vehicle automatic park-in progress in FIG. 3, only a relationship between the vehicle automatic park-in distances and the vehicle steering angles can be described.

Referring to Table 1, descriptions of relevant characteristic physical quantities related to the embodiments of the present application are shown. The characteristic physical quantities related to FIG. 2 and FIG. 3 may be specifically referred to Table 1.

**Table 1**

| Characteristic Physical quantity | Description |
|---|---|
| *S_{A}*(*t*) | Vehicle steering angle varying with time |
| *L_{Drv}*(*t*) | Real-time vehicle park-out distance varying with time in the vehicle park-out training process |
| *L_{Auto}*(*t*₁) | Vehicle park-in distance reproduced according to the vehicle park-out data in the vehicle automatic park-in process |
| *L_{Drv}*(*T*) | Total vehicle park-out distance in the vehicle park-out training process |
| *L_{Auto}*(*t*₂) | Real-time automatic park-out distance varying with time in the vehicle automatic park-out process |
| *Auto* | Vehicle automatic park-in process |
| ***Drv*** | Vehicle park-out training Process |
| *Vₓ*(*t*) | Real-time vehicle park-out speed varying with time in the vehicle park-out training process |
| *V*_{*x*1}(*t*₁) | Real-time vehicle park-in speed varying with time in the vehicle automatic park-in process |
| *V*_{*x*2}(*t*₂) | Real-time automatic park-out speed varying with time in the vehicle automatic park-out process |
| *P*₀ | Target position of the vehicle |
| *P*₁ | Stop position of the vehicle |
| *Vₛₑₜ* | Preset vehicle park-in speed/automatic park-out speed in the vehicle automatic park-in process/a vehicle automatic park-out process |

As shown in FIG. 2, when the driver drives into a narrow parking space which is not favourable for the driver and passengers to get on and off the vehicle, the driver may trigger the memory parking function of the vehicle through human-machine interface in the vehicle or physical key. The vehicle starts recording subsequent vehicle park-out data, as shown in FIG. 3, including vehicle park-out speeds *Vₓ*(*t*), vehicle steering angles *S_{A}*(*t*), and total vehicle park-out duration T. Here, the vehicle park-out data recorded by the vehicle may further include a vehicle gear position data, an accelerator pedal and a brake pedal.

Before triggering the memory parking function of the vehicle, an ultrasonic sensor may be arranged at a door of the vehicle. The ultrasonic sensor can detect obstacles and distances around the vehicle to determine whether there is enough space for opening the door of the vehicle. When a vehicle system detects that there are obstacles or insufficient space around the vehicle, corresponding prompt information may be displayed on the human-machine interface in the vehicle to remind the driver to trigger the memory parking function. In this way, potential risks caused by careless observation of the driver can be avoided.

For the vehicle park-out speeds, wheel speeds of four wheels of the vehicle may be collected by using wheel speed sensors, so as to obtain the vehicle park-out speeds. For the vehicle steering angles, steering-wheel steering angles can be monitored by using a steering wheel sensor to determine the vehicle steering angles. Alternatively, the steering-column steering angles can be monitored by using a steering column sensor to determine the vehicle steering angles. Alternatively, wheel steering angles can be monitored by using wheel angle sensors mounted on the wheels to determine the vehicle steering angles. For the vehicle gear position data, a gear position sensor may be used to collect the vehicle gear position data. For the accelerator pedal, relevant data of the accelerator pedal can be obtained by using a requested torque sent by an engine. For the brake pedal, relevant data of the brake pedal may be obtained by a requested braking force sent by the brake.

In practical application, the vehicle periodically records vehicle park-out data of the vehicle. To ensure accuracy of subsequent vehicle automatic park-in process, a record period may be set to 500 ms, that is, in a plurality of park-out time points, each adjacent two park-out time points are spaced by 500 ms. It should be noted that, setting the period of recording vehicle park-out data of the vehicle is limited in embodiments of the present application.

Step 102: integrating the vehicle park-out speeds with respect to time, to obtain a first mapping relationship between vehicle park-out distances of the vehicle and time points.

The real-time vehicle park-out speeds *Vₓ*(*t*) which varies with time and are obtained by the wheel speed sensors are integrated with respect to time, to obtain the first mapping relationship between vehicle park-out distances and time points. The specific formula is as follows:
${L}_{Drv} \left(t\right) = {\int }_{0}^{t} {V}_{x} \left(t\right) . d t$

The t in the formula 1 herein represents the plurality of park-out time points, and the vehicle park-out distances *L_{Drv}*(*t*) corresponding to the plurality of park-out time points can be obtained by using the above formula 1.

In related art for obtaining vehicle real-time positions, high-precision positioning devices are mostly used to collect the vehicle real-time positions. Moreover, in a vehicle positioning process, complex data operations or algorithms, such as positioning calculation, coordinate conversion and error correction, may also be required. In the embodiments of the present application, the vehicle park-out distances *L_{Drv}*(*t*) corresponding to the plurality of park-out time points can be obtained by using a relatively simple speed integration algorithm. In the training process, not only a positioning device for collecting positions of the vehicle is saved, but also complex data operations or algorithms are not required, so that excessive hardware cost can be reduced and an occurrence of an algorithm false triggering can be prevented.

Step 103: obtaining a total vehicle park-out distance according to the total vehicle park-out duration and the first mapping relationship, wherein the total vehicle park-out distance includes the vehicle park-out distances.

The total vehicle park-out duration *T* may be calculated by using vehicle gear position data. Specifically, when the memory parking function of the vehicle is triggered, it is a start time point of the vehicle park-out training, and when the driver shifts the vehicle gear position to a parking gear P, that is, when the current vehicle gear position is identified by the vehicle as the parking gear position through the gear sensor, it is an end time point of the vehicle park-out training. A duration from the start time point to the end time point of the vehicle park-out training is the total vehicle park-out duration T.

The total vehicle park-out distance *L_{Drv}*(*T*) can be obtained by replacing the *t* in the above formula 1 with a total vehicle park-out duration *T.* The total vehicle park-out distance *L_{Drv}*(*T*) may also be obtained by summing the vehicle park-out distances *L_{Drv}*(*t*) corresponding to the plurality of park-out time points in the above first mapping relationship.

A starting position of the vehicle park-out training is the target position *P*₀, and an end position of the vehicle park-out training is the stop position *P*₁*. P*₀ and *P*₁ are merely used for description. In embodiments of the present application, there is no need to perform vehicle position positioning by means of relevant sensors. Accordingly, the use of related hardwares can be reduced in the vehicle park-out training process, thereby reducing hardware costs.

Step 104: obtaining a second mapping relationship between the vehicle park-out distances and the vehicle steering angles according to the first mapping relationship and the vehicle steering angles corresponding to the plurality of park-out time points.

Specifically, the vehicle park-out distances *L_{Drv}*(*t*) and the vehicle steering angles *S_{A}*(*t*) are stored in a memory of the vehicle. Thus, a parking mapping relationship between *L_{Drv}*(*t*) and *S_{A}*(*t*), that is, the second mapping relationship, is established in the memory of the vehicle to obtain the following formula:
${S}_{A} \left({t}_{x}\right) = f \left({L}_{Drv}\left({t}_{x}\right)\right)$

*tₓ* in the formula 2 herein represents a specific time point of the vehicle park-out distance *L_{Drv}*(*t*) in the vehicle park-out training process, that is, a vehicle steering angle *S_{A}*(*tₓ*) corresponding to the vehicle park-out distance *L_{Drv}*(*t*) at the specific time point can be obtained according to the above formula 2.

Step 105: in response to triggering an automatic park-in function of the vehicle, determining target vehicle steering angles of the vehicle according to the second mapping relationship.

The driver can trigger the automatic park-in function of the vehicle by pressing a key on an external hardware device. In this case, the vehicle system will actively shift the vehicle gear position to a reverse gear R. The acceleration pedal and the brake pedal of the vehicle are controlled to maintain the vehicle performing automatic park-in operation at a preset vehicle park-in speed *Vₛₑₜ* in the vehicle automatic park-in process. To ensure safety in the vehicle automatic park-in process, the preset vehicle park-in speed *Vₛₑₜ* may be set to 3 kph. It should be noted that the preset vehicle park-in speed is not limited in embodiments of the present application.

The real-time vehicle park-in speeds *V*_{*x*1}(*t*₁) varying with time in the vehicle automatic park-in process are integrated with respect to time, to obtain the automatic park-in distances *L_{Auto}*(*t*₁) of the vehicle. The specific formula is as follows:
${L}_{Auto} \left({t}_{1}\right) = {\int }_{0}^{t 1} {V}_{x 1} \left({t}_{1}\right) . d {t}_{1}$

The *t*₁ in formula 3 herein represents the plurality of park-in time points in the vehicle automatic park-in process. The *t*₁ and *tₓ* may be one meaning, i.e., the plurality of park-in time points in the vehicle automatic park-in process represent a plurality of specific time points of vehicle park-out distance *L_{Drv}*(*t*) in the vehicle park-out training process.

At this time, the automatic park-in distance *L_{Auto}*(*t*₁) is subtracted from the total vehicle park-out distance *L_{Drv}*(*T*), to obtain target vehicle park-out distance *L_{Drv}*(*T*) - *L_{Auto}*(*t*₁). Based on the second mapping relationship stored in the memory of the vehicle, namely Formula 2, the following formula can be derived:
${S}_{A} \left({t}_{1}\right) = f \left({L}_{Drv}\left(T\right)-{L}_{Auto}\left({t}_{1}\right)\right)$

According to the above formula 4, the target vehicle steering angle *S_{A}*(*tₓ*) corresponding to the plurality of park-in time points in the vehicle automatic park-in process can be obtained.

Step 106: in response to controlling the vehicle to automatically park in from the stop position to the target position, controlling a steering wheel of the vehicle respectively by using corresponding target vehicle steering angles based on a plurality of park-in time points.

When the driver triggers the automatic park-in function of the vehicle, the vehicle system controls the vehicle to automatically park in from the stop position *P*₁ to the target position *P*₀ according to the data recorded in the above process. At this time, the vehicle system inputs obtained target vehicle steering angles *S_{A}*(*tₓ*) to the steering wheel of the vehicle, so as to control the steering wheel of the vehicle by using corresponding target vehicle steering angles based on the plurality of park-in time points.

When a numerical value of automatic park-in distance *L_{Auto}*(*t*₁) of the vehicle is equal to that of total vehicle park-out distance *L_{Drv}*(*T*), the vehicle system determines that the vehicle automatic park-in is completed. At this time, the vehicle system ends the automatic park-in function and completes parking logic, and the vehicle system shifts the vehicle gear position to P, straightens the steering wheel, and pulls up the electronic handbrake.

In embodiments of the present application, the driver triggers an action of a memory parking function of the vehicle, vehicle park-out data when the vehicle parks out from a target position to a stop position is recorded, wherein the vehicle park-out data includes vehicle steering angles and vehicle park-out speeds corresponding to a plurality of park-out time points, and total vehicle park-out duration, the vehicle park-out speeds with respect to time is integrated to obtain a first mapping relationship between vehicle park-out distances of the vehicle and time points, a total vehicle park-out distance according to the total vehicle park-out duration and the first mapping relationship is then obtained, wherein the total vehicle park-out distance includes the vehicle park-out distances, a second mapping relationship between the vehicle park-out distances and the vehicle steering angles is obtained according to the first mapping relationship and the vehicle steering angles corresponding to the plurality of park-out time points, so as to when the driver triggers an automatic park-in function of the vehicle, determine target vehicle steering angles of the vehicle according to the second mapping relationship, and when controlling the vehicle to automatically park in from the stop position to the target position, control a steering wheel of the vehicle by using corresponding target vehicle steering angles based on a plurality of park-in time points. So that the vehicle can reversely park in the target position according to previously recorded vehicle park-out data without human manipulation. The parking method solves a problem that all persons in the vehicle cannot get off the vehicle when the vehicle is parked in a narrow parking space. Not only does it enable all persons in the vehicle to conveniently get on or off the vehicle at an appropriate position, i.e., the stop position, but also reduces related hardware for parking training and simplifies algorithms during parking training, thereby avoiding excessive cost during parking training and preventing occurrence of algorithm false triggering, so that the parking method can be more widely applied.

In an embodiment of the present application, the vehicle steering angle is determined based on a steering-wheel steering angle.

Specifically, in the embodiments of the present application, the vehicle steering angle can be determined not only according to the steering-wheel steering angle, but also according to any associated component in the vehicle steering system such as the steering column and vehicle wheels of the vehicle. Wherein, steering-wheel steering angles can be monitored by using a steering wheel sensor to determine the vehicle steering angles, the steering-column steering angles can be monitored by using a steering column sensor to determine the vehicle steering angles, and wheel steering angles can be monitored by using wheel angle sensors mounted on the wheels to determine the vehicle steering angles. It should be noted that, the manner of determining vehicle steering speeds is not limited in embodiments of the present application.

In an embodiment of the present application, in step 105, in response to triggering an automatic park-in function of the vehicle, determining target vehicle steering angles of the vehicle according to the second mapping relationship includes:
determining vehicle park-in distances corresponding to a plurality of park-in time points of the vehicle; and
determining target vehicle steering angles respectively corresponding to the plurality of park-in time points according to the vehicle park-in distances corresponding to the plurality of park-in time points and the second mapping relationship.

Specifically, in the vehicle automatic park-in process, it is required to determine vehicle park-in distances corresponding to the plurality of park-in time points for the vehicle. Then, according to the vehicle park-in distances corresponding to the plurality of park-in time points, target vehicle steering angles corresponding to the plurality of park-in time points are determined from the second mapping relationship including a correspondence between the vehicle park-out distances and the vehicle steering angles. Target vehicle steering angles respectively corresponding to the plurality of park-in time points are determined according to the vehicle park-in distances corresponding to the plurality of park-in time points and the second mapping relationship. There is no need for other complex algorithms or hardware to auxiliarily adjust the vehicle steering angles, so that the vehicle can perform accurate automatic park-in operations under various conditions, which avoids excessive hardware costs in the vehicle automatic park-in process, improves the accuracy and reliability of the vehicle automatic park-in function, helps reduce the probability of algorithm false triggering, improves an automatic park-in efficiency, and optimizes the performance of a park-in system.

In an embodiment of the present application, the vehicle further includes a plurality of sensors and a memory. In step 101, recording vehicle park-out data when the vehicle parks out from a target position to a stop position includes:
periodically collecting vehicle park-out data when the vehicle parks out from the target position to the stop position by using the plurality of sensors; and
recording the vehicle park-out data in the memory.

Specifically, in the embodiments of the present application, the plurality of sensors may specifically include sensors such as a wheel speed sensor, a steering wheel sensor, a steering column sensor, a wheel angle sensor, and a gear position sensor. By using these sensors, vehicle park-out data such as vehicle park-out speeds, vehicle steering angles, and vehicle gear position data corresponding to the plurality of park-out time points can be collected.

The vehicle may include a plurality of memories, such as NvM (Non-Volatile Memory), RAM (Random Access Memory) and ROM (Read-Only Memory). In the embodiments of the present application, vehicle park-out data is recorded in the NvM, rather than being recorded in the RAM or the ROM. After the automatic park-in function of the vehicle is completed, the vehicle is required to be powered off. After the vehicle is powered off, data in NvM may be saved and relevant data stored in NvM in the vehicle park-out training process may be used after the vehicle is powered on next time (i.e., when the vehicle automatic park-out function is triggered). If data is stored in RAM, internal data of the RAM will be lost when the vehicle is powered off, which leads to that relevant data in the vehicle park-out training process is not obtained when the vehicle automatic park-out function is triggered. If data is stored in ROM, recorded data in the first vehicle park-out training process cannot be deleted when the memory parking function of the vehicle is triggered again subsequently, so there exists a problem that when the memory parking function is triggered multiple times, relevant data required to be recorded is not recorded due to insufficient storage space. At the same time, considering that the NvM storage space of the vehicle is limited, when the vehicle speed is 0, the vehicle park-out data of the vehicle is invalid and not recorded in the NvM.

In an embodiment of the present application, the vehicle includes an accelerator pedal and a brake pedal. In step 106, in response to controlling the vehicle to automatically park in from the stop position to the target position, controlling a steering wheel of the vehicle respectively by using corresponding target vehicle steering angles based on a plurality of park-in time points includes:
in response to controlling the vehicle to automatically park in from the stop position to the target position, controlling the vehicle to travel at a preset vehicle park-in speed, and controlling a steering wheel of the vehicle by using corresponding target vehicle steering angles based on a plurality of park-in time points.

Wherein the vehicle park-in speed corresponds to the plurality of park-in time points, and changes in the vehicle park-in speed corresponding to the plurality of park-in time points are divided into three phases: an acceleration phase, a constant-speed phase, and a deceleration phase.

Controlling the vehicle to travel at a preset vehicle park-in speed includes:
in the acceleration phase, increasing the vehicle park-in speed of the vehicle from zero to a preset vehicle speed via the accelerator pedal for accelerating traveling;
in the constant-speed phase, controlling the vehicle park-in speed of the vehicle to remain at the preset vehicle speed for constant-speed traveling; and
in the deceleration phase, reducing the vehicle park-in speed of the vehicle from the preset vehicle speed to zero via the brake pedal for stopping traveling.

To ensure safety in the vehicle automatic park-in process, the vehicle park-in speeds in the vehicle automatic park-in process may be controlled by the accelerator pedal and the brake pedal of the vehicle. The vehicle is automatically parked in at a preset vehicle park-in speed *Vₛₑₜ*. In this case, the preset park-in speed *Vₛₑₜ* may be set to 3 kph. It should be noted that the preset vehicle park-in speed are not limited in embodiments of the present application.

Referring to FIG. 4, an example diagram of changes in vehicle park-in speed/automatic park-out speed during vehicle automatic park-in process and vehicle automatic park-out process according to an embodiment of the present application is shown. The characteristic physical quantities in FIG. 4 may refer to Table 1. Specifically, the vehicle park-in speeds in the vehicle automatic park-in process are controlled by the accelerator pedal and the brake pedal of the vehicle. The changes of the vehicle park-in speeds can be divided into three phases: the acceleration phase, the constant-speed phase and the deceleration phase. The speeds at the acceleration phase and the deceleration phase may be fitted according to actual requirements, which may be linear or nonlinear acceleration/deceleration, without uniqueness.

In an embodiment of the present disclosure, determining vehicle park-in distances corresponding to a plurality of park-in time points of the vehicle includes:
periodically collecting vehicle park-in speeds of the vehicle by using the plurality of sensors; and
integrating the vehicle park-in speeds with respect to time, to obtain vehicle park-in distances of the vehicle, wherein the vehicle park-in distances correspond to the plurality of park-in time points.

In the vehicle automatic park-in process, wheel speeds of four wheels are collected by using wheel speed sensors to calculate vehicle park-in speeds. Then, the real-time vehicle park-in speed *V*_{*x*1}(*t*₁) varying with time in the vehicle automatic park-in process are integrated with respect to time, to obtain the automatic park-in distance *L_{Auto}*(*t*₁) of the vehicle.

In related art for obtaining vehicle real-time positions, high-precision positioning devices are mostly used to collect the vehicle real-time positions. Moreover, in a vehicle positioning process, complex data operations or algorithms, such as positioning calculation, coordinate conversion and error correction, may also be required. In the embodiments of the present application, the vehicle park-in distances *L_{Auto}*(*t*₁) corresponding to the plurality of park-in time points can be obtained by using a relatively simple speed integration algorithm. In the training process, not only a positioning device for collecting positions of the vehicle is saved, but also complex data operations or algorithms are not required, so that excessive hardware cost can be reduced and an occurrence of an algorithm false triggering can be prevented.

In an embodiment of the present disclosure, determining target vehicle steering angles respectively corresponding to the plurality of park-in time points according to the vehicle park-in distances corresponding to the plurality of park-in time points and the second mapping relationship includes:
subtracting the vehicle park-in distances corresponding to the plurality of park-in time points from the total vehicle park-out distance respectively, to obtain target vehicle park-out distances of the vehicle corresponding to the plurality of park-in time points; and
according to the target vehicle park-out distances of the vehicle corresponding to the plurality of park-in time points, obtaining, from the second mapping relationship, vehicle steering angles corresponding to the plurality of park-in time points as the target vehicle steering angles.

In the vehicle automatic park-in process, it is required to subtract the vehicle park-in distances *L_{Auto}*(*t*) corresponding to the plurality of park-in time points from the total vehicle park-out distance *L_{Drv}*(*T*), to obtain target vehicle park-out distances. Then, according to the target vehicle park-out distances corresponding to the plurality of park-in time points, target vehicle steering angles corresponding to the plurality of park-in time points are determined from the second mapping relationship including a correspondence between the vehicle park-out distances and the vehicle steering angles. By utilizing a relationship between the vehicle park-in distances *L_{Auto}*(*t*) corresponding to the plurality of park-in time points and the total vehicle park-out distance *L_{Drv}*(*T*), the vehicle can realize vehicle reverse automatic parking back along the track in the vehicle park-out training process via simple subtraction operations. There is no need for other complex algorithms or hardware to auxiliary adjust the vehicle steering angles, so that the vehicle can perform accurate automatic park-in operations under various conditions, which avoids excessive hardware costs in the vehicle automatic park-in process, improves the accuracy and reliability of the vehicle automatic park-in function, helps reduce the probability of algorithm false triggering, improves an automatic park-in efficiency, and optimizes the performance of a park-in system.

In an embodiment of the present application, after step 106, in response to controlling the vehicle to automatically park in from the stop position to the target position, controlling a steering wheel of the vehicle respectively by using corresponding target vehicle steering angles based on a plurality of park-in time points, the method further includes:
in response to triggering an automatic park-out function of the vehicle, controlling an automatic park-out speed of the vehicle by using the accelerator pedal and the brake pedal;
periodically collecting automatic park-out speeds of the vehicle by using the plurality of sensors, wherein the automatic park-out speeds correspond to a plurality of automatic park-out time points;
integrating the automatic park-out speeds with respect to time, to obtain automatic park-out distances corresponding to the plurality of automatic park-out time points;
according to the automatic park-out distances corresponding to the plurality of automatic park-out time points, obtaining park-out vehicle steering angles corresponding to the plurality of automatic park-out time points from the second mapping relationship; and;
in response to controlling the vehicle to automatically park out from the target position to the stop position, controlling the steering wheel of the vehicle by using corresponding park-out vehicle steering angles based on the plurality of automatic park-out time points.

Specifically, the driver can trigger the automatic park-out function of the vehicle by pressing a key on an external hardware device. In this case, the vehicle system will actively shift the vehicle gear position to a drive gear D. The acceleration pedal and the brake pedal of the vehicle are controlled to maintain the vehicle performing automatic park-out operation at a preset vehicle park-out speed *Vₛₑₜ* in the vehicle automatic park-out process. To ensure safety in the vehicle automatic park-out process, the preset vehicle park-in speed *Vₛₑₜ* may be set to 3 kph. It should be noted that the preset vehicle park-out speeds are not limited in embodiments of the present application.

The keys on the external hardware device that can trigger the automatic park-in function and the automatic park-out function of the vehicle belong to a same key, and the vehicle system may determine the current operation mode based on an input from the driver. The operation mode includes: a vehicle park-out training mode, a vehicle automatic park-in mode and a vehicle automatic park-out mode. In the vehicle park-out training mode, the driver can turn on or off the vehicle park-out training mode through a human-machine interface in the vehicle or a physical key. The vehicle automatic park-in mode follows immediately after the vehicle park-out training mode and whether the vehicle automatic park-in mode is used may be determined by whether the driver has got off the vehicle, and meanwhile, a key signal from external hardware devices is received. The vehicle automatic park-out mode is turned on only when the vehicle receives the key signal from external hardware devices after being powered on again.

In the vehicle automatic park-out process, wheel speeds of four wheels are collected by using wheel speed sensors to calculate automatic park-out speed *V*_{*x*2}(*t*₂). Then, the real-time automatic park-out speed *V*_{*x*2}(*t*₂) varying with time in the vehicle automatic park-in process are integrated with respect to time, to obtain the automatic park-out distance *L*_{*Auto*1}(*t*₂) of the vehicle. The *t*₂ represents a plurality of automatic park-out time points.

In related art for obtaining vehicle real-time positions, high-precision positioning devices are mostly used to collect the vehicle real-time positions. Moreover, in a vehicle positioning process, complex data operations or algorithms, such as positioning calculation, coordinate conversion and error correction, may also be required. In the embodiments of the present application, the automatic park-out distances *L*_{*Auto*1}(*t*₂) corresponding to the plurality of park-out time points can be obtained by using a relatively simple speed integration algorithm. In the training process, not only a positioning device for collecting positions of the vehicle is saved, but also complex data operations or algorithms are not required, so that excessive hardware cost can be reduced and an occurrence of an algorithm false triggering can be prevented.

Based on the automatic park-out distances corresponding to the plurality of automatic park-out time points, the park-out vehicle steering angles respectively corresponding to the plurality of automatic park-out time points can be obtained from the second mapping relationship including a correspondence between the vehicle park-out distances and the vehicle steering angles. There is no need for other complex algorithms or hardware to auxiliary adjust the vehicle steering angles, so that the vehicle can perform accurate automatic park-in operations under various conditions, which avoids excessive hardware costs in the vehicle automatic park-in process, improves the accuracy and reliability of the vehicle automatic park-in function, helps reduce the probability of algorithm false triggering, improves an automatic park-in efficiency, and optimizes the performance of a park-in system.

When the driver triggers the automatic park-out function of the vehicle, the vehicle system controls the vehicle to automatically park out from the target position *P*₀ to the stop position *P*₁ according to the data recorded in the above process for passengers to conveniently get on the vehicle. At this time, the vehicle system inputs obtained parking vehicle steering angles to the steering wheel of the vehicle, so as to control the steering wheel of the vehicle by using corresponding parking vehicle steering angles based on the plurality of park-out time points.

When a value of the automatic park-out distance *L*_{*Auto*1}(*t*₂) of the vehicle is equal to a value of the total vehicle park-out distance *L_{Drv}*(*T*), the vehicle system determines that the vehicle automatic park-out process is completed and automatically shifts the vehicle gear position into the parking gear P. When the driver opens the door of the vehicle, the vehicle system terminates the automatic park-out function.

In an embodiment of the present application, in step 106, in response to controlling the vehicle to automatically park in from the stop position to the target position, controlling a steering wheel of the vehicle respectively by using corresponding target vehicle steering angles based on a plurality of park-in time points further includes:
in response to receiving a stop instruction, performing a stop operation of the vehicle according to the stop instruction; or
in response to receiving a withdrawal instruction, controlling the vehicle to return to the stop position according to the withdrawal instruction.

Specifically, in order to prevent dangers caused in the vehicle automatic park-in process, the driver may stop the vehicle in an emergency by pressing a key on an external hardware device. When the dangers are eliminated, the vehicle may continue to perform the automatic park-in action. For dangers or obstacle that cannot be eliminated, the driver can also withdraw a request of automatic park-in by using a key on an external hardware device, and the vehicle will return to original stop position thereof again. The key on the external hardware device herein is the same as that on the external hardware device for triggering the automatic park-in function and the automatic park-out function of the vehicle, and in this case, the vehicle system determines whether the current vehicle is in an operation mode. If the current vehicle is in an operation mode, corresponding operations are performed according to an instruction in the corresponding operation mode. The stop instruction and the withdrawal instruction are distinguished by operating the key on the external hardware device. For example, short pressing the key belongs to the stop instruction, while long pressing the key belongs to the withdrawal instruction. It should be noted that the key operation for distinguishing between the stop instruction and the withdrawal instruction may vary according to actual requirements, which is not limited in embodiments of the present application.

In practical application, if the vehicle itself has the ultrasonic radar sensor, the vehicle system may determine whether there are any danger or obstacle that cannot be observed by the driver during automatic park-in process and automatic park-out process according to real-time monitoring of the ultrasonic radar sensor so as to avoid influence caused by the fact that the driver does not observe the danger. The ultrasonic radar sensor herein is not used in the vehicle park-out training process.

In an embodiment of the present application, in response to controlling the vehicle to automatically park out from the target position to the stop position, controlling the steering wheel of the vehicle by using corresponding park-out vehicle steering angles based on the plurality of automatic park-out time points includes:
in response to receiving a stop instruction, performing a stop operation of the vehicle according to the stop instruction.

Specifically, operations in the vehicle automatic park-out progress are similar to those in the vehicle automatic park-in progress. Both processes can be performed by operating a key on an external hardware device.

In an embodiment of the present application, after, in response to controlling the vehicle to automatically park out from the target position to the stop position, controlling the steering wheel of the vehicle by using corresponding park-out vehicle steering angles based on the plurality of automatic park-out time points, the method further includes:
in response to re-triggering the memory parking function, clearing the memory; or
in response to receiving a clearing instruction, clearing the memory according to the clearing instruction.

Specifically, due to the limited storage space of NvM in the vehicle, data in NvM is required to be cleared so as to ensure that relevant data in the next vehicle park-out training process can be effectively stored and improve efficiency of vehicle automatic park-in and vehicle automatic park-out. In the embodiments of the present application, after the vehicle completes automatic park-out process, the driver gets on the vehicle and confirms completion on the human machine interface in the vehicle or a physical key. That is, when the vehicle receives the clearing instruction, data in NvM can be cleared; or, after the next memory parking function is triggered, relevant data recorded in NvM during the previous vehicle park-out training process will be cleared.

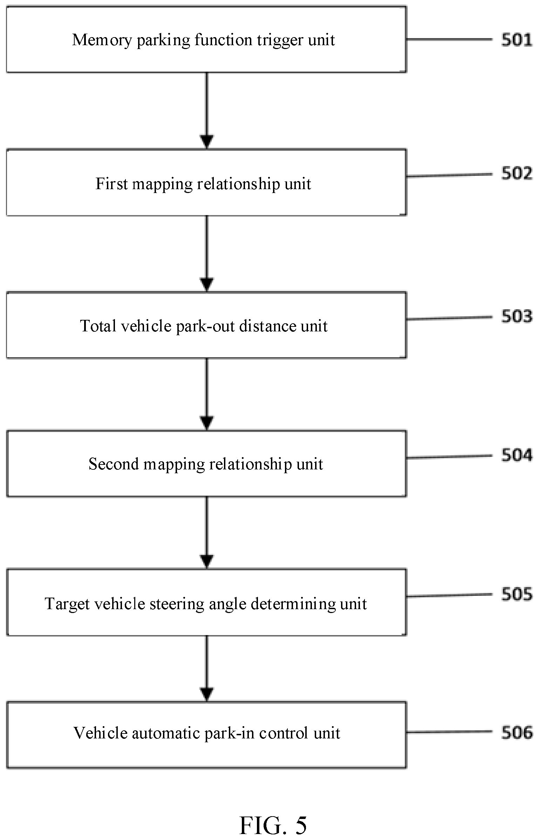

Referring to FIG. 5, a schematic diagram of a structure of a parking apparatus according to an embodiment of the present application is shown. The apparatus is applied to a vehicle and may include the following functional units:
a memory parking function trigger unit 501, configured to, in response to triggering a memory parking function of the vehicle, record vehicle park-out data when the vehicle parks out from a target position to a stop position, wherein the vehicle park-out data includes vehicle steering angles and vehicle park-out speeds corresponding to a plurality of park-out time points, and total vehicle park-out duration;
a first mapping relationship unit 502, configured to integrate the vehicle park-out speeds with respect to time, to obtain a first mapping relationship between vehicle park-out distances of the vehicle and time points;
a total vehicle park-out distance unit 503, configured to obtain a total vehicle park-out distance according to the total vehicle park-out duration and the first mapping relationship, wherein the total vehicle park-out distance includes the vehicle park-out distances;
a second mapping relationship unit 504, configured to obtain a second mapping relationship between the vehicle park-out distances and the vehicle steering angles according to the first mapping relationship and the vehicle steering angles corresponding to the plurality of park-out time points;
a target vehicle steering angle determining unit 505, configured to, in response to triggering an automatic park-in function of the vehicle, determine target vehicle steering angles of the vehicle according to the second mapping relationship; and
a vehicle automatic park-in control unit 506, configured to, in response to controlling the vehicle to automatically park in from the stop position to the target position, control a steering wheel of the vehicle by using corresponding target vehicle steering angles based on a plurality of park-in time points.

In an embodiment of the present application, the vehicle steering angle is determined based on a steering-wheel steering angle.

In an embodiment of the present application, the target vehicle steering angle determining unit 505 may include the following segments:
a vehicle park-in distance determining section, configured to determine vehicle park-in distances corresponding to a plurality of park-in time points of the vehicle; and
a target vehicle steering angle determining section, configured to determine target vehicle steering angles respectively corresponding to the plurality of park-in time points according to the vehicle park-in distances corresponding to the plurality of park-in time points and the second mapping relationship.

In an embodiment of the present application, the vehicle further includes a plurality of sensors and a memory, and the memory parking function trigger unit 501 may include the following sections:
a vehicle park-out data collecting section, configured to periodically collect vehicle park-out data when the vehicle parks out from the target position to the stop position by using the plurality of sensors; and
a vehicle park-out data recording section, configured to record the vehicle park-out data in the memory.

In an embodiment of the present application, the vehicle includes an accelerator pedal and a brake pedal, and the vehicle automatic park-in control unit 506 may include the following sections:
a vehicle automatic park-in control section, configured to, in response to controlling the vehicle to automatically park in from the stop position to the target position, control the vehicle to travel at a preset vehicle park-in speed, and controlling a steering wheel of the vehicle by using corresponding target vehicle steering angles based on a plurality of park-in time points
wherein the vehicle park-in speed corresponds to the plurality of park-in time points, and changes in the vehicle park-in speed corresponding to the plurality of park-in time points are divided into three phases: an acceleration phase, a constant-speed phase, and a deceleration phase;
the vehicle automatic park-in control section includes:
   an acceleration element, configured to in the acceleration phase, increase the vehicle park-in speed of the vehicle from zero to a preset vehicle speed via the accelerator pedal for accelerating traveling;
   a constant-speed element, configured to in the constant-speed phase, control the vehicle park-in speed of the vehicle to remain at the preset vehicle speed for constant-speed traveling; and
   a deceleration element, configured to in the deceleration phase, reduce the vehicle park-in speed of the vehicle from the preset vehicle speed to zero via the brake pedal for stopping traveling.

In an embodiment of the present application, the vehicle park-in distance determining section may include the following elements:
a vehicle park-in speed collecting section, configured to periodically collect vehicle park-in speeds of the vehicle by using the plurality of sensors; and;
a vehicle park-in distance section, configured to integrate the vehicle park-in speeds with respect to time, to obtain vehicle park-in distances of the vehicle, wherein the vehicle park-in distances correspond to the plurality of park-in time points.

In an embodiment of the present application, the target vehicle steering angle determining section may include the following elements:
a target vehicle park-out distance element, configured to subtract the vehicle park-in distances corresponding to the plurality of park-in time points from the total vehicle park-out distance respectively, to obtain target vehicle park-out distances of the vehicle corresponding to the plurality of park-in time points; and
a target vehicle steering angle element, configured to according to the target vehicle park-out distances of the vehicle corresponding to the plurality of park-in time points, obtain, from the second mapping relationship, vehicle steering angles corresponding to the plurality of park-in time points as the target vehicle steering angles.

In an embodiment of the present application, after the vehicle automatic park-in control unit 506, the apparatus may further include the following functional units:
an automatic park-out speed control unit, configured to, in response to triggering an automatic park-out function of the vehicle, control an automatic park-out speed of the vehicle by using the accelerator pedal and the brake pedal;
an automatic park-out speed collecting unit, configured to periodically collect automatic park-out speeds of the vehicle by using the plurality of sensors, wherein the automatic park-out speeds correspond to a plurality of automatic park-out time points;
an automatic park-out distance unit, configured to integrate the automatic park-out speeds with respect to time, to obtain automatic park-out distances corresponding to the plurality of automatic park-out time points;
a park-out vehicle steering angle unit, configured to according to the automatic park-out distances corresponding to the plurality of automatic park-out time points, obtain park-out vehicle steering angles corresponding to the plurality of automatic park-out time points from the second mapping relationship; and;
a vehicle automatic park-out control unit, configured to, in response to controlling the vehicle to automatically park out from the target position to the stop position, control the steering wheel of the vehicle by using corresponding park-out vehicle steering angles based on the plurality of automatic park-out time points.

In an embodiment of the present application, the vehicle automatic park-in control unit 506 may further include the following sections:
a vehicle automatic park-in stop section, configured to, in response to receiving a stop instruction, perform a stop operation of the vehicle according to the stop instruction; or
a vehicle automatic park-in withdrawal section, configured to, in response to receiving a withdrawal instruction, control the vehicle to return to the stop position according to the withdrawal instruction.

In an embodiment of the present application, the vehicle automatic park-out control unit may include the following segment:
a vehicle automatic park-out stop section, configured to, in response to receiving a stop instruction, perform a stop operation of the vehicle according to the stop instruction.

In an embodiment of the present application, after the vehicle automatic park-out control unit, the apparatus may further include the following modules:
a memory clearing unit, configured to, in response to re-triggering the memory parking function, clear the memory; or configured to, in response to receiving a clearing instruction, clear the memory according to the clearing instruction.

In the embodiment of the present application, the parking apparatus is provided. The driver triggers an action of a memory parking function of the vehicle, vehicle park-out data when the vehicle parks out from a target position to a stop position is recorded, wherein the vehicle park-out data includes vehicle steering angles and vehicle park-out speeds corresponding to a plurality of park-out time points, and total vehicle park-out duration, the vehicle park-out speeds with respect to time is integrated to obtain a first mapping relationship between vehicle park-out distances of the vehicle and time points, a total vehicle park-out distance according to the total vehicle park-out duration and the first mapping relationship is then obtained, wherein the total vehicle park-out distance includes the vehicle park-out distances, a second mapping relationship between the vehicle park-out distances and the vehicle steering angles is obtained according to the first mapping relationship and the vehicle steering angles corresponding to the plurality of park-out time points, so as to when the driver triggers an automatic park-in function of the vehicle, determine target vehicle steering angles of the vehicle according to the second mapping relationship, and when controlling the vehicle to automatically park in from the stop position to the target position, control a steering wheel of the vehicle by using corresponding target vehicle steering angles based on a plurality of park-in time points. So that the vehicle can reversely park in the target position according to previously recorded vehicle park-out data without human manipulation. The parking method solves a problem that all persons in the vehicle cannot get off the vehicle when the vehicle is parked in a narrow parking space. Not only does it enable all persons in the vehicle to conveniently get on or off the vehicle at an appropriate position, i.e., the stop position, but also reduces related hardware for parking training and simplifies algorithms during parking training, thereby avoiding excessive cost during parking training and preventing occurrence of algorithm false triggering, so that the parking method can be more widely applied.

For the apparatus embodiments, since they are substantially similar to the method embodiments, descriptions thereof will be simplified. For related parts, descriptions of the method embodiments are referred to.

The embodiments of the present application further provide a vehicle, including a processor, a memory, and computer instructions stored in the memory and capable of running on the processor, wherein the computer instructions, when being executed by the processor, implement above the parking method.

Embodiments of the present application further provide provides a computer-readable storage medium, the computer-readable storage medium has computer instructions stored thereon, and the computer instructions, when being executed by a processor, implement the above parking method.

Each embodiment in the specification is described in a progressive manner, and each embodiment focuses on differences from other embodiments. The same or similar parts among the embodiments are referred to one another.

Those skilled in the art should understand that embodiments of the present application may be provided as a method, an apparatus, a vehicle or a computer program product. Therefore, embodiments of the present application may be implemented in a form of an entirely hardware embodiment, an entirely software embodiment, or an embodiment combining software and hardware aspects. Moreover, the embodiments of the present application may be implemented in a form of a computer program product stored on one or more computer readable storage media (including but not limited to a magnetic disk memory, a CD-ROM, and an optical memory) that contain computer usable program codes.

The embodiments of the present application are described with reference to the flowchart diagrams and/or block diagrams of a method, a terminal device (system), and computer program product according to the embodiments of the present application. It should be understood that each flow and/or block, and combinations of flows and/or blocks in the flowchart diagram and/or block diagrams, can be implemented by computer program instructions. These computer program instructions may be provided to a processor of a general purpose computer, special purpose computer, embedded processor or other programmable data processing terminal device to produce a machine, such that instructions executed on the processor of the computer or other programmable data processing terminal device create devices for implementing the functions specified in one or more flow of the flowchart diagram and/or one or more blocks in the block diagram.

These computer program instructions may also be stored in a computer readable memory that can direct a computer or other programmable data processing terminal device to work in a particular manner, such that the instructions stored in the computer readable memory generate a manufacture including an instruction device, and the instruction device implements functions specified in one or more flow of the flowchart diagram and/or one or more blocks in the block diagram.

These computer program instructions may also be loaded onto a computer or other programmable data processing terminal device, such that series of operations steps are performed on the computer or other programmable terminal device to generate a computer-implemented process, so that the instructions executed on the computer or other programmable terminal device provide steps for implementing functions specified in one or more flow of the flowchart diagram and/or one or more blocks in the block diagram.

Although preferred embodiments of the present application have been described, those skilled in the art can make other changes and modifications to these embodiments once they are informed of the basic creative concept. Therefore, the appended claims are intended to include preferred embodiments and all changes and modifications falling within the scope of the present application.

Finally, it should be noted that the relationship terms such as "first", "second" and so on are merely used to distinguish one entity or operation from another entity or operation in this specification, but do not necessarily require or imply any actual relationship or order between these entities or operations. Moreover, the terms "include", "contain" or any other variant thereof are intended to cover non-exclusive inclusion so that a process, method, article or terminal device including a series of elements not only includes those elements but also includes other elements which are not explicitly listed, or further includes elements inherent in such a process, method, article or terminal device. Unless otherwise specified, the elements defined by the statement "including a . . . " do not exclude that there are other same elements in the process, method, article or terminal device including the element.

The above provides a detailed description of the parking method, the parking apparatus, the corresponding vehicle and the corresponding computer readable storage medium. The principles and implementations of the present application are described with specific examples in the present specification. The descriptions of the above embodiments are only used for helping to understand the methods and core ideas of the present application. Meanwhile, those skilled in the art may make changes on the specific embodiments and applications according to the idea of the present application. In conclusion, the content of the present specification should not be understood as limitations to the present application.

## Claims

1. A parking method, applied to a vehicle, comprising:
in response to triggering a memory parking function of the vehicle, recording vehicle park-out data when the vehicle parks out from a target position to a stop position, wherein the vehicle park-out data comprises vehicle steering angles and vehicle park-out speeds corresponding to a plurality of park-out time points, and total vehicle park-out duration;
integrating the vehicle park-out speeds with respect to time, to obtain a first mapping relationship between vehicle park-out distances of the vehicle and time points;
obtaining a total vehicle park-out distance according to the total vehicle park-out duration and the first mapping relationship, wherein the total vehicle park-out distance comprises the vehicle park-out distances;
obtaining a second mapping relationship between the vehicle park-out distances and the vehicle steering angles according to the first mapping relationship and the vehicle steering angles corresponding to the plurality of park-out time points;
in response to triggering an automatic park-in function of the vehicle, determining target vehicle steering angles of the vehicle according to the second mapping relationship; and
in response to controlling the vehicle to automatically park in from the stop position to the target position, controlling a steering wheel of the vehicle respectively by using corresponding target vehicle steering angles based on a plurality of park-in time points.

2. The method according to claim 1, wherein the vehicle steering angle is determined based on a steering-wheel steering angle.

3. The method according to claim 1 or 2, wherein, in response to triggering an automatic park-in function of the vehicle, determining target vehicle steering angles of the vehicle according to the second mapping relationship comprises:
determining vehicle park-in distances corresponding to a plurality of park-in time points of the vehicle; and
determining target vehicle steering angles respectively corresponding to the plurality of park-in time points according to the vehicle park-in distances corresponding to the plurality of park-in time points and the second mapping relationship.

4. The method according to claim 3, wherein the vehicle further comprises a plurality of sensors and a memory, and recording vehicle park-out data when the vehicle parks out from a target position to a stop position comprises:
periodically collecting vehicle park-out data when the vehicle parks out from the target position to the stop position by using the plurality of sensors; and
recording the vehicle park-out data in the memory.

5. The method according to claim 4, wherein the vehicle comprises an accelerator pedal and a brake pedal, and in response to controlling the vehicle to automatically park in from the stop position to the target position, controlling a steering wheel of the vehicle respectively by using corresponding target vehicle steering angles based on a plurality of park-in time points comprises:
in response to controlling the vehicle to automatically park in from the stop position to the target position, controlling the vehicle to travel at a preset vehicle park-in speed, and controlling a steering wheel of the vehicle by using corresponding target vehicle steering angles based on a plurality of park-in time points;
wherein the vehicle park-in speed corresponds to the plurality of park-in time points, and changes in the vehicle park-in speed corresponding to the plurality of park-in time points are divided into three phases: an acceleration phase, a constant-speed phase, and a deceleration phase;
controlling the vehicle to travel at a preset vehicle park-in speed comprises:
in the acceleration phase, increasing the vehicle park-in speed of the vehicle from zero to a preset vehicle speed via the accelerator pedal for accelerating traveling;
in the constant-speed phase, controlling the vehicle park-in speed of the vehicle to remain at the preset vehicle speed for constant-speed traveling; and
in the deceleration phase, reducing the vehicle park-in speed of the vehicle from the preset vehicle speed to zero via the brake pedal for stopping traveling.

6. The method according to claim 5, wherein determining vehicle park-in distances corresponding to a plurality of park-in time points of the vehicle comprises:
periodically collecting vehicle park-in speeds of the vehicle by using the plurality of sensors; and
integrating the vehicle park-in speeds with respect to time, to obtain vehicle park-in distances of the vehicle, wherein the vehicle park-in distances correspond to the plurality of park-in time points.

7. The method according to claim 3, wherein determining target vehicle steering angles respectively corresponding to the plurality of park-in time points according to the vehicle park-in distances corresponding to the plurality of park-in time points and the second mapping relationship comprises:
subtracting the vehicle park-in distances corresponding to the plurality of park-in time points from the total vehicle park-out distance respectively, to obtain target vehicle park-out distances of the vehicle corresponding to the plurality of park-in time points; and
according to the target vehicle park-out distances of the vehicle corresponding to the plurality of park-in time points, obtaining, from the second mapping relationship, vehicle steering angles corresponding to the plurality of park-in time points as the target vehicle steering angles.

8. The method according to claim 5, wherein after, in response to controlling the vehicle to automatically park in from the stop position to the target position, controlling a steering wheel of the vehicle respectively by using corresponding target vehicle steering angles based on a plurality of park-in time points, the method further comprises:
in response to triggering an automatic park-out function of the vehicle, controlling an automatic park-out speed of the vehicle by using the accelerator pedal and the brake pedal;
periodically collecting automatic park-out speeds of the vehicle by using the plurality of sensors, wherein the automatic park-out speeds correspond to a plurality of automatic park-out time points;
integrating the automatic park-out speeds with respect to time, to obtain automatic park-out distances corresponding to the plurality of automatic park-out time points;
according to the automatic park-out distances corresponding to the plurality of automatic park-out time points, obtaining park-out vehicle steering angles corresponding to the plurality of automatic park-out time points from the second mapping relationship; and
in response to controlling the vehicle to automatically park out from the target position to the stop position, controlling the steering wheel of the vehicle by using corresponding park-out vehicle steering angles based on the plurality of automatic park-out time points.

9. The method according to claim 5, wherein, in response to controlling the vehicle to automatically park in from the stop position to the target position, controlling a steering wheel of the vehicle respectively by using corresponding target vehicle steering angles based on a plurality of park-in time points further comprises:
in response to receiving a stop instruction, performing a stop operation of the vehicle according to the stop instruction; or
in response to receiving a withdrawal instruction, controlling the vehicle to return to the stop position according to the withdrawal instruction.

10. The method according to claim 9, wherein, in response to controlling the vehicle to automatically park out from the target position to the stop position, controlling the steering wheel of the vehicle by using corresponding park-out vehicle steering angles based on the plurality of automatic park-out time points comprises:
in response to receiving a stop instruction, performing a stop operation of the vehicle according to the stop instruction.

11. The method according to claim 10, wherein after, in response to controlling the vehicle to automatically park out from the target position to the stop position, controlling the steering wheel of the vehicle by using corresponding park-out vehicle steering angles based on the plurality of automatic park-out time points, the method further comprises:
in response to re-triggering the memory parking function, clearing the memory; or
in response to receiving a clearing instruction, clearing the memory according to the clearing instruction.

12. A parking apparatus, applied to a vehicle, comprising:
a memory parking function trigger unit, configured to, in response to triggering a memory parking function of the vehicle, record vehicle park-out data when the vehicle parks out from a target position to a stop position, wherein the vehicle park-out data comprises vehicle steering angles and vehicle park-out speeds corresponding to a plurality of park-out time points, and total vehicle park-out duration;
a first mapping relationship unit, configured to integrate the vehicle park-out speeds with respect to time, to obtain a first mapping relationship between vehicle park-out distances of the vehicle and time points;
a total vehicle park-out distance unit, configured to obtain a total vehicle park-out distance according to the total vehicle park-out duration and the first mapping relationship, wherein the total vehicle park-out distance comprises the vehicle park-out distances;
a second mapping relationship unit, configured to obtain a second mapping relationship between the vehicle park-out distances and the vehicle steering angles according to the first mapping relationship and the vehicle steering angles corresponding to the plurality of park-out time points;
a target vehicle steering angle determining unit, configured to, in response to triggering an automatic park-in function of the vehicle, determine target vehicle steering angles of the vehicle according to the second mapping relationship; and
a vehicle automatic park-in control unit, configured to, in response to controlling the vehicle to automatically park in from the stop position to the target position, control a steering wheel of the vehicle by using corresponding target vehicle steering angles based on a plurality of park-in time points.

13. A vehicle, comprising a processor, a memory, and computer instructions stored in the memory and capable of running on the processor, wherein the computer instructions, when being executed by the processor, implement the parking method according to any one of claims 1 to 11.

14. A computer-readable storage medium, wherein the computer-readable storage medium has computer instructions stored thereon, and the computer instructions, when being executed by a processor, implement the parking method according to any one of claims 1 to 11.
